# EUROPÄISCHE PATENTANMELDUNG

(11) **EP 1 244 197 A1**
(43) Veröffentlichungstag der Anmeldung: **25.09.2002**
(21) Anmeldenummer: 01107114.9
(22) Anmeldetag: 22.03.2001
(51) Int. Cl.: H02K 7/116, H02P 3/04, G01H 1/00

(54) **Getriebemotor**

(71) Anmelder: Danfoss Bauer GmbH, 73734 Esslingen (DE)
(72) Erfinder: Kelnhofer, Friedrich, Dipl.Ing., 55271 Elsheim (DE); Doppelbauer, Martin Dr.-Ing., 72644 Oberboihingen (DE)
(74) Vertreter: Knoblauch, Andreas, Dr.-Ing.

(57) **Zusammenfassung**

Es wird Getriebemotor (1) angegeben mit mindestens zwei Abschnitten, von denen einer als Motorabschnitt und ein anderer als Getriebeabschnitt ausgebildet ist.

Um die Überwachung einfach zu gestalten, ist in einem Abschnitt (I) mindestens ein Sensor (10, 11) angeordnet, der ein Sensorsignal abgibt, wobei eine Auswerteeinrichtung (12) vorgesehen ist, die aus dem Sensorsignal eine Betriebsgröße eines anderen Abschnitts (II) ermittelt und/oder das Sensorsignal mit einer Betriebsgröße des anderen Abschnitts (II) verknüpft.

## Beschreibung

Die Erfindung betrifft einen Getriebemotor mit mindestens zwei Abschnitten, von denen einer als Motorabschnitt und ein anderer als Getriebeabschnitt ausgebildet ist.

Getriebemotoren werden für viele Antriebsaufgaben verwendet, insbesondere dann, wenn die gewünschte Antriebsgeschwindigkeit relativ klein ist.

Getriebemotoren zeichnen sich dadurch aus, daß ein Motor, üblicherweise ein Elektromotor, und ein mechanisches Getriebe nicht nur in einem festen Wirkzusammenhang stehen, sondern auch in einem gemeinsamen Gehäuse oder in starr miteinander gekuppelten Gehäuseteilen untergebracht sind. Lediglich die Ausgangswelle des Getriebes ragt nach außen.

Zur Überwachung des Betriebs eines derartigen Getriebemotors kann man Sensoren verwenden, beispielsweise um die Temperatur und den Füllstand des Getriebeöls zu ermitteln. Falls die Temperatur ansteigt oder der Füllstand absinkt, kann man ein Alarmsignal erzeugen oder den Getriebemotor stillsetzen. Für komplexere Überwachungsaufgaben wird jedoch der Aufwand relativ groß. In vielen Fällen steht auch der für Sensoren benötigte Platz in bestimmten Teilen des Getriebemotors nicht zur Verfügung.

Der Erfindung liegt die Aufgabe zugrunde, eine Überwachung einfach zu gestalten.

Diese Aufgabe wird bei einem Getriebemotor der eingangs genannten Art dadurch gelöst, daß in einem Abschnitt mindestens ein Sensor angeordnet ist, der ein Sensorsignal abgibt, wobei eine Auswerteeinrichtung vorgesehen ist, die aus dem Sensorsignal eine Betriebsgröße eines anderen Abschnitts ermittelt und/oder das Sensorsignal mit einer Betriebsgröße des anderen Abschnitts verknüpft.

Bei dieser Vorgehensweise macht man sich zunutze, daß der Motor und das Getriebe in dem Getriebemotor fest miteinander verbunden sind. Man kann nun diese feste Verbindung und ein daraus resultierendes Übertragungsverhalten verwenden, um physikalische Größen an bestimmten Positionen des Getriebemotors zu messen, die dann in entsprechende Kennwerte an ganz anderen Stellen des Getriebemotors umgerechnet werden können. Man ist daher in der Wahl der Meßstelle und in der Wahl der zu messenden physikalischen Größen wesentlich freier als bisher, so daß man beispielsweise räumlichen Begrenzungen durch beengte Platzverhältnisse ausweichen kann. In vielen Fällen kann man eine Auswahl auch unter wirtschaftlichen Gesichtspunkten treffen und preisgünstigere Sensoren verwenden, wenn es möglich ist, die gewünschte Kenngröße aus dem Sensorausgangssignal und dem Übertragungsverhalten zu ermitteln. Darüber hinaus ist es nun gegebenenfalls auch möglich, aus einer Kombination von Kenngrößen beider Abschnitte weitergehende Informationen zu gewinnen, etwa über ein Gesamt-Lastverhalten.

Vorzugsweise ist in mindestens zwei Abschnitten jeweils mindestens ein Sensor angeordnet, und die Auswerteeinrichtung verknüpft die Sensorsignale miteinander und bildet ein Ausgangssignal. Dieses Ausgangssignal kann dann für ein Diagnosesystem verwendet werden, das fortlaufend oder in kurzen zeitlichen Abständen den Betriebszustand des Gesamtsystems aus Motor und Getriebe ermittelt.

Vorzugsweise weist die Auswerteeinrichtung eine Eingabeeinrichtung und einen Speicher auf. Getriebemotoren werden üblicherweise individuell auf die Bedürfnisse eines Verwenders hin zusammengestellt. Beispielsweise wird die Übersetzung des Getriebes an den Wünschen eines Kunden ausgerichtet. Mit der Änderung der Übersetzung ändert sich aber auch das Übertragungsverhalten zwischen dem Motor und der Ausgangswelle des Getriebes. Die Kopplung zwischen Gehäuseteilen bleibt hingegen gleich. Wenn man nun vorsieht, daß die Auswerteeinrichtung eine Eingabeeinrichtung aufweist, mit der beispielsweise das Übersetzungsverhältnis des Getriebes eingegeben und im Speicher abgelegt werden kann, dann läßt sich die gleiche Auswerteeinrichtung für eine Vielzahl von unterschiedlichen Getriebemotoren verwenden.

Hierbei ist bevorzugt, daß die Eingabeeinrichtung geschützt ist. Beispielsweise wird die entsprechende Übersetzung werksseitig vorgegeben. Sie kann dann vom Anwender ohne Spezialkenntnisse oder -werkzeug nicht geändert werden. Eine Änderung ist allerdings durch einen Wartungstechniker möglich, falls das erforderlich sein sollte.

Vorzugsweise weist die Auswerteeinrichtung eine Ausgangssignalspeichereinrichtung auf. Die Auswerteeinrichtung kann dann den Verlauf des Ausgangssignals über einen vorbestimmten Zeitraum speichern. Alternativ oder zusätzlich kann vorgesehen sein, daß die Auswerteeinrichtung aus dem Ausgangssignal über die Zeit hinweg eine Sammelgröße bildet, die beispielsweise ein Ausdruck für die Belastungsgeschichte darstellt. Wenn dieser Wert einen bestimmten voreingestellten Schwellwert überschreitet, dann kann dies angezeigt werden, um beispielsweise eine Wartung auszulösen. Der Vorteil bei einer derartigen Vorgehensweise ist, daß eine Wartung oder Inspektion immer nur dann ausgeführt werden muß, wenn sie durch die Belastungsgeschichte des Getriebemotors erforderlich geworden ist. Getriebemotoren, die unter einer kleineren Belastung arbeiten, können daher mit längeren Wartungsintervallen betrieben werden.

Vorzugsweise weist die Auswerteeinrichtung eine Schnittstelle nach außen auf. An eine derartige Schnittstelle, beispielsweise nach dem Standard einer RS-485 Schnittstelle, läßt sich ein Computer anschließen, so daß ein Wartungstechniker bestimmte Diagnosen vornehmen kann. Gegebenenfalls ist eine derartige Diagnose auch mit einer Fernabfrage möglich.

Bevorzugterweise ist eine Sensoranordnung zur Ermittlung des Phasenwinkels zwischen Motorstrom und - spannung vorgesehen, und die Auswerteeinrichtung ermittelt daraus ein Getriebemoment. Aus dem Phasenwinkel und einer hinterlegten Tabelle läßt sich relativ genau das Motordrehmoment bestimmen. Dieses Motordrehmoment wirkt eintreibend als Getriebedrehmoment und ist damit ein unmittelbares Maß für die Belastung des Getriebes. Verluste im Getriebe sind normalerweise relativ klein und können daher vernachlässigt werden. Alternativ dazu kann man sie für die Getriebebelastung mit einrechnen. Herkömmlicherweise hätte man die Gesamt-Getriebebelastung mittels Meßwelle oder Dehnungsmeßstreifen ermitteln müssen. Es ist allerdings relativ schwierig, eine derartige Drehmomentmeßeinrichtung im Getriebe anzubringen. In vielen Fällen steht auch der erforderliche Platz gar nicht zur Verfügung. Wenn man hingegen die speziellen Eigenschaften eines Getriebemotors nutzt, dann kann man die Bestimmung des Getriebedrehmoments auch über das Motordrehmoment vornehmen, weil der Wirkzusammenhang zwischen Motor und Getriebe fest vorgegeben ist.

Vorzugsweise ist im Motorabschnitt ein Drehzahlsensor angeordnet, und die Auswerteeinrichtung ermittelt aus der Drehzahl der Motorwelle die Drehzahl am Ausgang des Getriebeabschnitts. Das Messen der Drehzahl am Getriebeein- oder -austrieb ist relativ aufwendig. Beide Wellen, d.h. die Eintrieb- und die Austriebwelle sind in den meisten Fällen nicht frei zugänglich, da sie zur Übertragung des Drehmoments verwendet werden. Die Ermittlung der Drehzahl ist zwar prinzipiell möglich, allerdings außerordentlich aufwendig. Beispielsweise muß man Leuchtstreifen applizieren und optische Meßeinrichtungen verwenden. Auch ergibt sich eine hohe Empfindlichkeit dieser Meßmethode auf Umgebungsbedingungen. Wenn man hingegen die Drehzahl am Motor ermittelt, beispielsweise mit Hilfe eines Impulsgebers, dann kann man über den fest vorgegebenen Zusammenhang zwischen der Motordrehzahl und der Drehzahl am Ausgang des Getriebes unmittelbar Informationen über die Drehzahl am Ausgang oder Austrieb des Getriebes gewinnen. Diese Vorgehensweise hat darüber hinaus den Vorteil, daß die Drehzahlermittlung am Motor mit einer relativ hohen Genauigkeit erfolgen kann, weil sich die Motorwelle in der Regel wesentlich schneller dreht als die Getriebeausgangswelle.

Hierbei ist besonders bevorzugt, daß die Auswerteeinrichtung aus der Drehzahl und dem Moment am Ausgang des Getriebes eine Getriebebelastung ermittelt. Die Getriebebelastung ergibt sich vereinfacht ausgedrückt aus dem Produkt aus Drehzahl und Drehmoment. Anhand der Getriebebelastung läßt sich beispielsweise abschätzen, wann eine Wartung erforderlich ist.

Vorzugsweise ist im Getriebeabschnitt ein Beschleunigungssensor angeordnet, mit dessen Hilfe die Auswerteeinrichtung Vibrationen im Motorabschnitt ermittelt. Beschleunigungssensoren arbeiten beispielsweise nach dem piezoelektrischen Prinzip. Sie sind allerdings relativ teuer. Mit der vorgeschlagenen Lösung ist es daher möglich, so wenig Beschleunigungssensoren wie möglich zu verwenden. Durch die beim Getriebemotor gegebene feste Kupplung zwischen Motorgehäuse und Getriebegehäuse reicht ein einziger Sensor am Getriebe aus, um auch die Vibrationen des Motors zu erkennen. Die Vibrationen des Motors sind Indikatoren für Fehlermöglichkeiten, beispielsweise für Schäden an den Motorlagern.

Alternativ oder zusätzlich dazu kann im Getriebeabschnitt auch ein Mikrofon angeordnet sein, das mit der Auswerteeinrichtung verbunden ist. Vibrationen verursachen in der Regel Geräusche, die wesentlich kostengünstiger zu erfassen sind als die Vibrationen selbst. Man kann also auf indirektem Weg über die Geräusche Informationen über bestimmte, sich abzeichnende Schäden gewinnen. Das Mikrofon wird in geeigneter Weise geschützt, beispielsweise mit einer schalldurchlässigen Abdeckung versehen.

Hierbei ist bevorzugt, daß die Auswerteeinrichtung eine Frequenzanalyseeinrichtung aufweist. Jedes Lager und jede Getriebestufe weisen ein oder mehrere charakteristische Frequenzbänder auf. Es reicht nun aus, wenn die Frequenzanalyseeinrichtung herausfindet, ob und in welcher Stärke bestimmte Frequenzbänder vorhanden sind, d.h. ob es Geräusche in bestimmten Frequenzbereichen gibt und mit welcher Intensität diese Geräusche austreten.

vorzugsweise ist die Frequenzanalyseeinrichtung mit einem Speicher verbunden und die Auswerteeinrichtung nimmt einen Langzeitvergleich von vorbestimmten Frequenzbändern vor. Mit Hilfe des Langzeitvergleichs ist es möglich festzustellen, ob sich Geräusche in vorbestimmten Frequenzbändern überproportional ändern oder nicht. Wenn eine derartige Änderung erfolgt, ist dies ein Zeichen für einen drohenden Schaden an einem Lager oder an einer Getriebestufe. Ein langsam ansteigender Geräuschpegel deutet hingegen auf einen normalen Verschleiß hin. Auch hier kann man aber dafür sorgen, daß vor Erreichen eines kritischen Pegels eine Wartung veranlaßt wird, beispielsweise durch Ausgabe eines entsprechenden Warnsignals.

Vorzugsweise ist ein Abschnitt als Bremsabschnitt mit einer auf den Motorabschnitt wirkenden Bremse ausgebildet, wobei ein Motorstromsensor und ein Hubsensor in der Bremse vorgesehen ist und die Auswerteeinrichtung die Signale dieser beiden Sensoren miteinander verknüpft. Die Messung an der Bremse kann sich auf den Verschleißweg beschränken. Sobald ein Hub festgestellt wird, der ein vorbestimmtes, zusätzliches Maß überschreitet, ist die Bremse verschlissen. Die Verschleißteile müssen ausgetauscht werden. Wertvoller sind allerdings Informationen über den Betriebszustand der Bremse, den man aus dem Zusammenhang zwischen dem Motorstrom und dem Hubweg der Bremse gewinnen kann. Wenn kein Motorstrom fließt, dann muß der Hubweg der Bremse null sein. Andernfalls ist die Bremse nicht korrekt eingefallen oder ausgelöst, beispielsweise aufgrund übermäßiger Staubablagerung. Sobald ein Motorstrom fließt, muß der Hubweg signifikant ansteigen. Andernfalls ist die Bremse nicht korrekt gelüftet, beispielsweise aufgrund eines Schadens an der Bremsmagnetspule. Aus der Differenz der beiden Wegmessungen, d.h. aus dem Hub, läßt sich, wie oben angegeben, ein Rückschluß auf den Abriebzustand der Bremsscheibe vornehmen. Herkömmlicherweise wäre die Versorgungsspannung der Bremse zusätzlich mit Hilfe eines dort angeordneten Spannungssensors zu messen. Dieser kann nun entfallen.

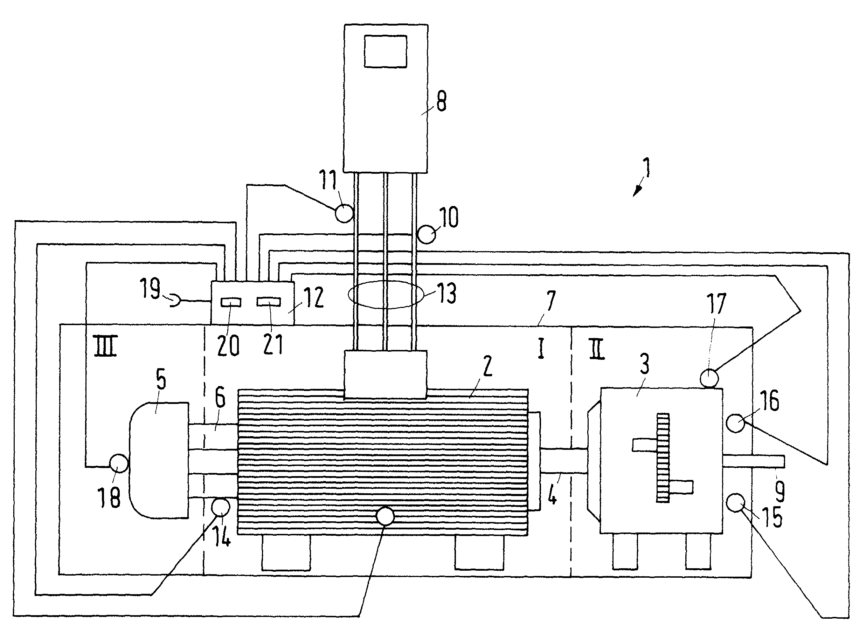

Die Erfindung wird im folgenden anhand eines bevorzugten Ausführungsbeispiels in Verbindung mit einer Zeichnung beschrieben. Hierin zeigt die
- einzige Figur: eine schematische Darstellung eines Getriebemotors.

Ein Getriebemotor 1 weist einen Motor 2 auf, der beispielsweise als elektrischer Asynchronmotor ausgebildet ist. Mit dem Motor 2 ist fest gekuppelt ein Getriebe 3, wobei eine Motor 2 und Getriebe 3 verbindende Welle 4 als Ausgangswelle für den Motor und als Eingangswelle für das Getriebe 3 dient. Das Getriebe 3 weist eine feste Übersetzung auf. Diese Übersetzung kann mit einer Mehrzahl von Stufen, beispielsweise zwei oder drei Stufen, realisiert werden.

Am dem Getriebe 3 gegenüberliegenden Ende des Motors 2 ist eine mechanische Bremse 5 angeordnet, die auf einen Abschnitt 6 der an diesem Ende aus dem Motor 2 herausragenden Motorwelle wirkt.

Der Motor 2, das Getriebe 3 und die Bremse 5 sind in einem gemeinsamen Gehäuse 7 angeordnet, das dementsprechend einen Motorabschnitt I, einen Getriebeabschnitt II und einen Bremsabschnitt III aufweist. Um die einzelnen Abschnitte für die nachfolgende Erläuterung gegeneinander abzugrenzen, sind gestrichelte Linien zwischen den Abschnitten I, II und III dargestellt. In Wirklichkeit müssen derartige Unterteilungen, etwa in Form von Gehäusewänden, nicht vorhanden sein. Üblicherweise ist das Gehäuse 7 auch nicht als Kasten ausgebildet, der alle Abschnitte umschließt, sondern der Motor 2 ist von außen fest an ein Getriebegehäuse angeflanscht. Mit der Darstellung des Gehäuses 7 soll zum Ausdruck gebracht werden, daß Motorgehäuse, Getriebegehäuse und gegebenenfalls auch das Gehäuse der Bremse 5 mechanisch fest verbunden sind, so daß Belastungen, die auf einen Abschnitt wirken, in einem anderen Abschnitt ebenfalls Auswirkungen haben, die in einer festen Beziehung zu den Belastungen stehen.

Der Motor 2 ist durch einen Frequenzumrichter 8 gespeist. Die Speisefrequenz ist variabel. Dementsprechend läßt sich die Geschwindigkeit des Motors 2 in weiten Grenzen frei wählen.

Aus dem Gehäuse 7 ragt lediglich eine Abtriebswelle 9 des Getriebes 3 heraus. Alle anderen Funktionselemente sind von außen im Betrieb nicht zugänglich. Lediglich für Wartungen und Inspektionen können Öffnungen im Gehäuse 7 vorgesehen sein.

Um den Betrieb des Getriebemotors 1 zu überwachen und eine Möglichkeit bereitzustellen, eine Diagnose auszuführen, sind verschiedene Sensoren in und am Getriebemotor 1 untergebracht.

Zunächst sind ein Stromsensor 10 und ein Spannungssensor 11 vorgesehen, die mit einer Auswerteeinrichtung 12 verbunden sind. Diese beiden Sensoren 10, 11 sind der Einfachheit halber in einer dreiphasigen Leitung 13 zwischen dem Frequenzumrichter 8 und dem Motor 2 dargestellt. Sie können aber auch im Inneren oder am Ausgang des Frequenzumrichters 8 oder am elektrischen Eingang des Motors 2 angeordnet sein. Beide Sensoren 10, 11 ermitteln den Motorstrom bzw. die Motorspannung mehrphasig, d.h. dreiphasig bei einem dreiphasigen Motor. Mit Hilfe der beiden Sensoren 10, 11 ist man in der Lage, den Phasenwinkel zwischen Motorstrom und Motorspannung zu bestimmen. Der Phasenwinkel erlaubt es, mit Hilfe von Werten, die beispielsweise in einer nicht dargestellten Tabelle abgelegt sind, das Motordrehmoment zu bestimmen. Diese Werte können für jeden Motor oder für jeden Motortyp im voraus bestimmt werden. Das Motordrehmoment wirkt eintreibend als Getriebedrehmoment und ist damit ein unmittelbares Maß für die Belastung des Getriebes. Die Verluste im Getriebe sind in der Regel entweder so klein, daß man sie vernachlässigen kann, oder man kann einen gewissen Verlustanteil bei der Auswertung mit einrechnen.

Dadurch, daß man die Getriebebelastung aus dem Motordrehmoment, genauer gesagt aus Messungen elektrischer Größen der Versorgung des Motors 2, ermittelt, werden aufwendige Meßeinrichtungen im Getriebe eingespart, beispielsweise Meßwellen oder Dehnungsmeßstreifen. In manchen Fällen war es ohnehin überhaupt nicht möglich, derartige Meßelemente im Getriebeabschnitt II unterzubringen.

Am Abschnitt 6 der Welle des Motors 2 ist ein Drehzahlsensor 14 angeordnet. Der Drehzahlsensor 14, der beispielsweise als Hohlwellendrehgeber ausgebildet sein kann und 1024 Impulse pro Umdrehung erzeugt, ist ebenfalls mit der Auswerteeinrichtung 12 verbunden. Die Drehzahl kann ebenfalls für das Getriebe 2 verwendet werden und ist von entscheidender Bedeutung für die Beurteilung der Lastsituation. Aus der Drehzahl des Motors 2 läßt sich unter anderem die Drehzahl an der Abtriebswelle 9 des Getriebes ermitteln, da das Übersetzungsverhältnis des mechanischen Getriebes 3 bekannt ist. Durch Integration der Drehzahl läßt sich beispielsweise auch relativ genau bestimmen, welchen Antriebsweg das Getriebe 3 verursacht hat. Vor allem aber kann man mit Hilfe der Drehzahl und gegebenenfalls auch des Drehmoments die Lastsituation des Getriebes beurteilen.

Die Ermittlung der Drehzahl der Abgangswelle 9 des Getriebes 3 über die Motorwelle ist wesentlich einfacher, da die Getriebeein- und -austriebswelle in der Regel nicht frei zugänglich sind. Sie werden bereits zur Übertragung des Drehmoments benutzt.

Ferner ist am Getriebe ein Beschleunigungssensor 15 angeordnet, der ebenfalls mit der Auswerteeinrichtung 12 verbunden ist. Derartige Sensoren, die beispielsweise nach dem piezoelektrischen Prinzip arbeiten, sind relativ teuer. Man versucht daher, nur so wenig Sensoren wie irgend möglich zu verwenden. Durch die beim Getriebemotor gegebene feste Kupplung zwischen Motorgehäuse und Getriebegehäuse reicht ein einziger Sensor am Getriebe 3 aus, um die Vibrationen des Motors 2 und damit beispielsweise Schäden der Motorlager erkennen zu können.

Zusätzlich oder anstelle des Beschleunigungssensors 15 kann auch einfach ein Mikrofon im Getriebeabschnitt vorgesehen sein. Das Mikrofon ist mit einer geeigneten, schalldurchlässigen Abdeckung versehen, damit es vor Verschmutzungen gesichert ist. Das Mikrofon ist dann mit der Auswerteeinrichtung 12 verbunden, die zu diesem Zweck eine Frequenzanalyseeinrichtung aufweist. Jedes Lager weist in der Regel mehrere charakteristische Frequenzbänder auf. In ähnlicher Weise weist jede Getriebestufe ein oder mehrere charakteristische Frequenzbänder auf. Die Frequenzanalyseeinrichtung ist nun in der Lage, zu überprüfen, ob in den vom Mikrofon aufgenommenen Geräuschen die entsprechenden Frequenzbänder vorhanden sind, und wenn ja, mit welcher Amplitude die entsprechenden Geräusche auftreten. Wenn die Frequenzanalyseeinrichtung, die zu diesem Zweck noch mit einem nicht näher dargestellten Speicher verbunden sein kann, feststellt, daß sich eine überproportionale Steigerung in einzelnen Frequenzbändern ergibt, dann ist dies ein Zeichen dafür, daß in einem Lager oder in einer Getriebestufe ein Schaden aufgetreten ist oder sich zumindest abzeichnet. In diesem Fall kann eine entsprechende Warnung ausgegeben werden. Steigt hingegen der Pegel in den Frequenzbändern nur langsam an, läßt dies auf den normalen Verschleiß schließen. Auch in diesem Fall kann man aber ein Warnsignal ausgeben, wenn ein bestimmter Pegel überschritten wird. in diesem Fall kann der Betreiber eine Wartung veranlassen.

Am Getriebe können weitere Sensoren angeordnet sein, beispielsweise ein Temperatursensor 16 zur Messung der Temperatur des Getriebeöls und ein Füllstandsensor 17 zur Messung der Füllstandhöhe des Getriebeöls. Alle drei zuletzt genannten Sensoren sind ebenfalls mit der Auswerteeinrichtung 12 verbunden. Die Auswerteeinrichtung 12 kann beispielsweise überprüfen, ob die Lastsituation zur Temperatur des Getriebeöls paßt. Damit ist eine zusätzliche Sicherheit gegeben, da die errechneten Werte für die Belastung des Getriebes auf Plausibilität geprüft werden können. Wenn sich beispielsweise aus dem Phasenwinkel an und für sich eine hohe Getriebebelastung ergeben sollte, die Getriebeöltemperatur aber sehr niedrig bleibt, deutet dies auf einen Fehler in der Sensoranordnung hin.

An der Bremse 5 ist ein weiterer Sensor 18 angeordnet, der den Hubweg einer Bremsscheibe mißt. Die Bremse 5 wird in an sich bekannter Weise über einen Elektromagneten betätigt.

Da beim Motor mit Hilfe des Stromsensors 10 bereits der Strom erfaßt wird, kann man mit Hilfe des Motorstromes eine Sollwertvorgabe für den Hubweg der Bremse 5 generieren. Wenn kein Motorstrom fließt, dann muß der Hubweg null sein. Andernfalls ist die Bremse 5 nicht korrekt eingefallen, beispielsweise aufgrund übermäßiger Staubablagerung oder anderer Erscheinungen, die bei einer Wartung beseitigt werden können.

Sobald ein Motorstrom fließt, muß der Hubweg signifikant ansteigen. Andernfalls ist die Bremse nicht korrekt gelüftet, beispielsweise aufgrund eines Schadens an der Magnetspule der Bremse. Die Differenz der beiden Wegmessungen läßt darüber hinaus Rückschlüsse auf den Abriebzustand der Bremsscheibe zu. Wenn man den Motorstrom, d.h. eine Meßgröße aus dem Motorabschnitt I, verwendet, dann spart man sich im Bremsenabschnitt III die Ermittlung der Versorgungsspannung der Bremse.

Die Auswerteeinrichtung 12 weist zunächst einmal eine Schnittstelle 19 auf, mit deren Hilfe Daten nach außen übertragen werden können. Beispielsweise kann es sich bei einer derartigen Schnittstelle um eine RS-485 Schnittstelle zur Kommunikation mit einem Laptop-Computer handeln, den ein Wartungstechniker anschließen kann, um eine Diagnose des Getriebemotors 1 vornehmen zu können.

Ferner ist eine Eingabeeinrichtung 20 und ein Speicher 21 vorgesehen. Mit Hilfe der Eingabeeinrichtung 20 ist es möglich, verschiedene Kennwerte des Getriebemotors 1 vorzugeben. Ein derartiger Kennwert ist beispielsweise das Übersetzungsverhältnis des Getriebes 3. Derartige Kennwerte werden im Speicher 21 dauerhaft gespeichert. Durch die Möglichkeit einer Eingabe läßt sich die Auswerteeinrichtung 12 an praktisch beliebige Getriebemotoren anpassen.

Sicherheitshalber kann man dafür sorgen, daß die Eingabeeinrichtung 20 für den normalen Benutzer nicht frei zugänglich ist. Die entsprechenden Werte können beispielsweise nur im Werk nach der Herstellung eingelesen werden oder von einem Wartungstechniker. Eine Änderung der Kennwerte des Getriebemotors 1 im Betrieb ist üblicherweise nicht erforderlich.

Dargestellt ist, daß die Auswerteeinrichtung 12 am Gehäuse 7 angeflanscht ist. Dies ist jedoch nicht erforderlich. Die Auswerteeinrichtung 12 kann auch in räumlicher Nähe, aber entfernt vom Gehäuse 7 angeordnet sein.

Der Speicher 21 kann weiterhin verwendet werden, um eine Belastungsgeschichte des Getriebemotors 1 zu speichern. Dies kann einerseits dadurch erfolgen, daß man eine zeitliche Abfolge von Belastungswerten abspeichert. Man kann alternativ oder zusätzlich dazu aus den einzelnen Belastungswerten auch einen Belastungskollektivwert bilden, der dann eine Aussage über die Belastung in der Vergangenheit erlaubt. Anstelle der Belastung sind natürlich auch andere Betriebsdaten auswertbar.

## Patentansprüche

1. Getriebemotor mit mindestens zwei Abschnitten, von denen einer als Motorabschnitt und ein anderer als Getriebeabschnitt ausgebildet ist, **dadurch gekennzeichnet, daß** in einem Abschnitt (I) mindestens ein Sensor (10, 11) angeordnet ist, der ein Sensorsignal abgibt, wobei eine Auswerteeinrichtung (12) vorgesehen ist, die aus dem Sensorsignal eine Betriebsgröße eines anderen Abschnitts (II) ermittelt und/oder das Sensorsignal mit einer Betriebsgröße des anderen Abschnitts (II) verknüpft.

2. Getriebemotor nach Anspruch 1, **dadurch gekennzeichnet, daß** in mindestens zwei Abschnitten (I, II) jeweils mindestens ein Sensor (10, 11; 16) angeordnet ist und die Auswerteeinrichtung (12) die Sensorsignale miteinander verknüpft und ein Ausgangssignal bildet.

3. Getriebemotor nach Anspruch 1 oder 2, **dadurch gekennzeichnet, daß** die Auswerteeinrichtung (12) eine Eingabeeinrichtung (20) und einen Speicher (21) aufweist.

4. Getriebemotor nach Anspruch 3, **dadurch gekennzeichnet, daß** die Eingabeeinrichtung (20) geschützt ist.

5. Getriebemotor nach einem der Ansprüche 1 bis 4, **dadurch gekennzeichnet, daß** die Auswerteeinrichtung (12) eine Ausgangssignalspeichereinrichtung aufweist.

6. Getriebemotor nach einem der Ansprüche 1 bis 5, **dadurch gekennzeichnet, daß** die Auswerteeinrichtung (12) eine Schnittstelle (19) nach außen aufweist.

7. Getriebemotor nach einem der Ansprüche 1 bis 6, **dadurch gekennzeichnet, daß** eine Sensoranordnung (10, 11) zur Ermittlung des Phasenwinkels zwischen Motorstrom und Motorspannung vorgesehen ist und die Auswerteeinrichtung (12) daraus ein Getriebemoment ermittelt.

8. Getriebemotor nach einem der Ansprüche 1 bis 7, **dadurch gekennzeichnet, daß** im Motorabschnitt (I) ein Drehzahlsensor (14) angeordnet ist und die Auswerteeinrichtung (12) aus der Drehzahl der Motorwelle (6) die Drehzahl am Ausgang (9) des Getriebeabschnitts (II) ermittelt.

9. Getriebemotor nach Anspruch 8, **dadurch gekennzeichnet, daß** die Auswerteeinrichtung (12) aus der Drehzahl und dem Moment am Ausgang (9) des Getriebes (2) eine Getriebebelastung ermittelt.

10. Getriebemotor nach einem der Ansprüche 1 bis 9, **dadurch gekennzeichnet, daß** im Getriebeabschnitt (II) ein Beschleunigungssensor (15) angeordnet ist, mit dessen Hilfe die Auswerteeinrichtung Vibrationen im Motorabschnitt (I) ermittelt.

11. Getriebemotor nach einem der Ansprüche 1 bis 10, **dadurch gekennzeichnet, daß** im Getriebeabschnitt (II) ein Mikrofon angeordnet ist, das mit der Auswerteeinrichtung (12) verbunden ist.

12. Getriebemotor nach Anspruch 11, **dadurch gekennzeichnet, daß** die Auswerteeinrichtung (12) eine Frequenzanalyseeinrichtung aufweist.

13. Getriebemotor nach Anspruch 12, **dadurch gekennzeichnet, daß** die Frequenzanalyseeinrichtung mit einem Speicher verbunden ist und die Auswerteeinrichtung (12) einen Langzeitvergleich von vorbestimmten Frequenzbändern vornimmt.

14. Getriebemotor nach einem der Ansprüche 1 bis 13, **dadurch gekennzeichnet, daß** ein Abschnitt (III) als Bremsabschnitt mit einer auf den Motorabschnitt (I) wirkenden Bremse (5) ausgebildet ist, daß ein Motorstromsensor (10) und ein Hubsensor (18) in der Bremse vorgesehen ist und die Auswerteeinrichtung (12) die Signale dieser beiden Sensoren (10, 18) miteinander verknüpft.
